# EUROPÄISCHE PATENTSCHRIFT

(11) **EP 3 097 989 B1**
(45) Veröffentlichungstag und Bekanntmachung des Hinweises auf die Patenterteilung: **27.10.2021**
(21) Anmeldenummer: 16171616.2
(22) Anmeldetag: 27.05.2016
(51) Int. Cl.: B08B 9/44, B65G 47/57

(54) **VORRICHTUNG UND VERFAHREN ZUM TRANSPORTIEREN EINES BEHÄLTERS**
DEVICE AND METHOD FOR TRANSPORTING A CONTAINER
DISPOSITIF ET MÉTHODE DE TRANSPORT D'UN RECIPIENT

(30) Priorität: 28.05.2015 DE 102015108391
(43) Veröffentlichungstag der Anmeldung: 30.11.2016
(73) Patentinhaber: KRONES AG, 93073 Neutraubling (DE)
(72) Erfinder: Hansen, Denny, 93073 Neutraubling (DE); Fiedler, Hans-Rudolf, 93073 Neutraubling (DE); Davidson, Hartmut, 93073 Neutraubling (DE); Walter, Ralf, 93073 Neutraubling (DE); Koch, Uwe, 93073 Neutraubling (DE)
(74) Vertreter: Nordmeyer, Philipp Werner

(56) Entgegenhaltungen:
- DE-A1- 1 948 308
- DE-A1- 3 835 216
- FR-A- 1 322 629

## Beschreibung

### Technisches Gebiet

Die vorliegende Erfindung betrifft eine Vorrichtung zum Transportieren eines Behälters in eine Behälterzelle einer Reinigungsmaschine hinein oder aus einer Behälterzelle einer Reinigungsmaschine hinaus, besonders bevorzugt zur Verwendung in einer Getränkeabfüllanlage zur Vorbereitung von Mehrwegbehältern für die Befüllung.

### Stand der Technik

In Getränkeabfüllanlagen ist es bekannt, Mehrwegflaschen und andere Mehrwegbehälter vor der erneuten Befüllung in Reinigungsmaschinen zu reinigen. Bei dieser Reinigung werden die Behälter nicht nur restentleert, von innen gereinigt und in einen hygienischen Zustand versetzt, sondern es werden auch die Außenseiten der jeweiligen Behälter von Verschmutzungen befreit, eventuell aufgebrachte Etiketten entfernt und Klebstoffreste entfernt. Als Mehrwegbehälter werden heute eine Vielzahl an verschiedenen Behälterformen und Behältergeometrien verwendet, insbesondere mit Variationen in Höhe, Durchmesser und Mündungsbeschaffenheit. Weiterhin werden Mehrwegbehälter aus unterschiedlichen Materialien, wie beispielsweise Glasflaschen oder Kunststoffflaschen, verwendet.

Um ein effizientes Reinigen der Behälter zu ermöglichen, werden diese an eine Reinigungsmaschine übergeben, wobei jeder einzelne Behälter in Behälterzellen aufgenommen wird und durch die Reinigungsmaschine und damit auch durch die unterschiedlichen Behandlungsstationen in der Reinigungsmaschine transportiert wird. Die Behälterzellen durchlaufen die Reinigungsmaschine, wobei bevorzugt mehrere Behälterzellen nebeneinander angeordnet sind, welche simultan mit zu reinigenden Behältern bestückt werden.

Zum Bestücken der jeweiligen Behälterzelle beziehungsweise der nebeneinander angeordneten Behälterzellen am Eingang der Reinigungsmaschine sind Vorrichtungen zum Transportieren der Behälter bekannt. Die Behälter werden dabei typischer Weise über einen Zulauftisch, einen Stautisch oder ein Zulaufband der Transportvorrichtung zugeführt, welche dann ein Transportieren der zugeführten Behälter in die jeweiligen Behälterzellen vornimmt.

Insbesondere werden durch diese Transportvorrichtungen einerseits Höhenunterschiede zwischen dem jeweiligen Zulauf und der Behälterzelle überbrückt und zum anderen erfährt der Behälter oftmals eine Schwenkbewegung, zumeist, um ihn von einer vertikalen Position, welche der Behälter am Zulauf innehat, in eine im Wesentlichen horizontale Position, in welcher er in die Behälterzelle eingeführt werden kann, zu schwenken.

Derartige Transportvorrichtungen umfassen zumeist eine Leit- beziehungsweise Stützkontur, entlang welcher der jeweilige Behälter transportiert wird. Zum eigentlichen Transport sind dann mehrere drehbar gelagerte Hebelarme entlang der Stützkontur angeordnet, welche den Behälter entlang der jeweiligen Stützkontur weiterschieben. So ist zumeist ein erster Hebelarm zum Überführen des Behälters von einem Zulauf in eine Einführposition vorgesehen. Ein oberhalb der Einführposition angeordneter zweiter Hebelarm übernimmt den Behälter dann vom ersten Hebelarm und schiebt diesen anschließend in die Behälterzelle.

In der DE 101 41 500 A1 und der DE 197 03 369 A1 sind Vorrichtungen zum Transportieren von Gefäßen, wie Flaschen, gezeigt, bei welcher Flaschen entlang einer Stützkontur transportiert werden. Zum Aufnehmen und Weitertransportieren der Flaschen ist ein um eine Mitnehmerachse rotierender Mitnehmer zum Mitnehmen der Flaschen vorgesehen. Zum Einschieben der Flaschen in die Behälterzellen wird die Mitnehmerachse von ihrer Mitnahmeposition in eine Übergabeposition verschoben, wobei die Mitnehmerachse an einer Schwinge gelagert ist, welche zur Verschiebung der Mitnehmerachse mittels eines Koppeltriebs verschwenkt werden kann.

Die bekannten Vorrichtungen zum Transportieren von Behältern weisen eine im Wesentlichen fest definierte Trajektorie des jeweiligen Mitnehmers auf, entlang welcher entsprechend der Behälter im Zuge des Transportierens von dem Zulauf an die Behälterzelle verläuft. Diese Trajektorien sind nicht ohne weiteres einstellbar beziehungsweise können nicht ohne weiteres verstellt werden, sondern sind üblicher Weise lediglich für eine Behältergeometrie optimiert. Beim Transportieren eines anderen Behältertyps, welcher beispielsweise andere Abmessungen aufweist, ist ein optimales Transportieren somit nicht oder erst nach einem Umrüsten, beispielsweise dem Austausch der Mitnehmer beziehungsweise einem Umbau der Vorrichtung, möglich. Ferner kann es insbesondere bei der Überführung der Behälter von dem Zulauf zur Transportvorrichtung zu einer Geräuschentwicklung sowie zu Materialverschleiß beziehungsweise Materialschäden an den zu transportierenden Behältern und/oder Teilen der Transportvorrichtung kommen.

Die FR 1.322.629 A und DE 1 948 308 A beschreiben jeweils eine Vorrichtung zum Einbringen von Flaschen in eine Flaschenreinigungsmaschine. Die DE 38 35 216 A1 beschreibt eine Reinigungsmaschine für Behälter.

### Darstellung der Erfindung

Ausgehend von dem bekannten Stand der Technik ist es eine Aufgabe der vorliegenden Erfindung, eine verbesserte Vorrichtung zum Transportieren eines Behälters in eine Behälterzelle einer Reinigungsmaschine hinein oder aus einer Behälterzelle einer Reinigungsmaschine heraus bereitzustellen.

Diese Aufgabe wird durch eine Vorrichtung zum Transportieren eines Behälters mit den Merkmalen des Anspruch 1 gelöst. Vorteilhafte Weiterbildungen ergeben sich aus den Unteransprüchen.

Entsprechend wird eine Vorrichtung zum Transportieren eines Behälters in eine Behälterzelle einer Reinigungsmaschine hinein, bevorzugt in einer Getränkeabfüllanlage, vorgeschlagen, welche eine um eine Drehachse drehbaren Transporteinrichtung und mindestens einen an der Transporteinrichtung angeordneten Mitnehmerfinger zum Transportieren des Behälters umfasst. Erfindungsgemäß ist eine Abholvorrichtung zum Übernehmen des Behälters von einer Zulaufeinrichtung vorgesehen, wobei die Abholvorrichtung zwischen einer Abholposition und einer Übergabeposition bewegbar ist. Die Abholvorrichtung ist zwischen der Abholposition und der Übergabeposition derart schwenkbar, dass der Behälter durch die Schwenkbewegung der Abholvorrichtung in die Übergabeposition gegenüber der Zulaufeinrichtung leicht angehoben wird.

Dadurch, dass eine Abholvorrichtung zum Übernehmen des Behälters von einer Zulaufeinrichtung von zu transportierenden Behältern vorgesehen ist, wobei die Abholvorrichtung zwischen einer Abholposition und einer Übergabeposition bewegbar ist, kann ein besonders sanftes Überführen des Behälters von einer Zulaufeinrichtung an die Vorrichtung zum Transportieren des Behälters bereitgestellt werden. So können stoßhafte Bewegungen der Behälter vermieden werden und somit eine geringere Lärmentwicklung beim Überführen des Behälters von der Zulaufeinrichtung und eine geringere Abnutzung der Komponenten der Vorrichtung, insbesondere ein verringerter Oberflächenverschleiß und/oder Abrieb, sowie insbesondere ein geringes Aufkommen an Bruchschäden an den zu reinigenden Behältern erreicht werden.

Um einen durch die Zulaufeinrichtung bereitgestellten zu transportierenden Behälter sanft und ohne stoßhafte oder ruckartige Bewegungen aufnehmen zu können, ist in einer bevorzugten

Weiterbildung eine Behälteraufnahme der Abholvorrichtung in der Abholposition an der Zulaufeinrichtung positioniert und/oder ist die Behälteraufnahme ist zum sanften Mitnehmen des Behälters durch den Mitnehmerfinger ohne stoßhafte oder ruckartige Bewegungen des Behälters in der Übergabeposition an einer Stützkontur zum Stützen des Behälters während des Transportierens positioniert.

Ferner kann dadurch, dass eine Stützkontur zum Stützen des Behälters während des Transportierens vorgesehen ist, ein sanftes und stoßfreies Transportieren des Behälters bereitgestellt werden, wobei der Behälter durch die Stützkontur auf einer vorbestimmten Bahn geführt werden kann.

In einer besonders bevorzugten Ausführungsform ist eine Führungskurve zum Bewegen der Abholvorrichtung vorgesehen, wobei bevorzugt ein Führungstaster entlang einer Führungskurve geführt ist. Dadurch kann ein besonders einfacher Aufbau und gleichzeitig eine sichere Steuerung der Bewegung der Abholvorrichtung bereitgestellt werden. Bevorzugt ist die Führungskurve dabei an der Transporteinrichtung angeordnet beziehungsweise in diese integriert.

Ein besonders einfacher und robuster Aufbau der Vorrichtung wird dadurch bereitgestellt, dass die Abholvorrichtung zwischen der Abholposition und der Übergabeposition schwenkbar ist.

In einer weiter bevorzugten Ausgestaltungsform ist der Mitnehmerfinger um eine zur Drehachse exzentrisch an der Transporteinrichtung angeordnete Exzenterachse drehbar gelagert. Dadurch kann eine weitgehend frei einrichtbare und steuerbare Trajektorie des Mitnehmerfingers und damit auch der Ablaufkurve der Behältertransportbewegung bereitgestellt werden. Hierdurch kann die Vorrichtung für verschiedene Behältertypen jeweils angepasste dynamische Ablaufkurven bereitstellen, wodurch stoßhafte Bewegungen der Behälter vermieden werden können und somit eine geringere Lärmentwicklung beim Transportieren und eine geringere Abnutzung der Komponenten der Vorrichtung, insbesondere ein verringerter Oberflächenverschleiß und/oder Abrieb , sowie insbesondere ein geringes Aufkommen an Bruchschäden an den zu reinigenden Behältern erreichbar ist.

In einer weiter bevorzugten Ausführungsform sind die Transporteinrichtung und der mindestens eine Mitnehmerfinger unabhängig voneinander steuerbar. Dadurch, dass die Transporteinrichtung und der mindestens eine Mitnehmerfinger unabhängig voneinander steuerbar sind, kann die Ablaufkurve für jeden Behältertyp genau eingestellt werden, wobei insbesondere zur Übernahme des Behälters von einer Zulaufeinrichtung ein besonders sanftes Übernehmen des Behälters durch den Mitnehmerfinger und/oder ein besonders sanftes Übergeben des Behälters in eine Übernahmeeinrichtung bereitgestellt werden kann.

In einer bevorzugten Ausführungsvariante ist die Bewegung des Mitnehmerfingers für eine Übernahme des Behälters von einer Zuführeinrichtung gegenüber der Bewegung der Transporteinrichtung verzögerbar und die Bewegung der Transporteinrichtung ist für ein Übergeben des Behälters an eine Behälterzelle gegenüber der Bewegung des Mitnehmerfingers verzögerbar und die Bewegung des Mitnehmerfingers entsprechend beschleunigbar.

Durch die unabhängig voneinander einstellbaren Bewegungen des Mitnehmerfingers und der Transporteinrichtung kann ein besonders sanftes Transportieren des Behälters bereitgestellt werden, wobei ein geringer Verschleiß der Komponenten der Vorrichtung, insbesondere Oberflächenverschleiß, und eine geringe Belastung der zur drehbaren Lagerung der Transporteinrichtung um die Drehachse und der zur drehbaren Lagerung des Mitnehmerfingers um die Exzenterachse eingesetzten Lagerungen bereitgestellt werden.

In einer besonders bevorzugten Ausführungsform ist ein erster Antrieb zum Antreiben der Transporteinrichtung und bevorzugt mindestens ein zweiter Antrieb zum Antreiben des mindestens einen Mitnehmerfingers vorgesehen. Hierdurch können die Transporteinrichtung und der Mitnehmerfinger auf besonders einfache Weise unabhängig voneinander angetrieben werden und über eine entsprechende Ansteuerung der jeweiligen Antriebe eine flexiblere Anpassung der von den Mitnehmerfingern abgefahrenen Trajektorie erreichen. Bevorzugt sind die Bewegungen der Transporteinrichtung und des Mitnehmerfingers so aufeinander abgestimmt, dass eine für das Transportieren des Behälters optimierte Ablaufkurve bereitgestellt werden kann.

Bevorzugt sind der erste Antrieb und/oder der zweite Antrieb als Elektromotor, bevorzugt als Synchronmotor oder Asynchronmotor, besonders bevorzugt als Servomotor, bereitgestellt.

Alternativ können der erste Antrieb und/oder der zweite Antrieb auch über einen Koppeltrieb oder ein Getriebe bereitgestellt sein. Ferner kann der zweite Antrieb in Form einer vorspannbaren Feder bereitgestellt werden und/oder die Position des Mitnehmerfingers bevorzugt über einen Mitnehmer und eine Leitkurve steuerbar sein.

Bevorzugt sind alle Mitnehmerfinger auf einer gemeinsamen Welle angeordnet und mittels der gemeinsamen Welle antreibbar. Auf diese Weise lässt sich mittels eines einzigen Antriebs eine synchronisierte Bewegung aller Mitnehmerfinger erreichen.

In einer weiter bevorzugten Ausführungsausgestaltung weist die Stützkontur einen schwenkbar angeordneten Zuführbereich zum Zuführen des Behälters an eine Behälterzelle auf.

Dadurch, dass die Stützkontur einen schwenkbar angeordneten Zuführbereich zum Zuführen des Behälters an eine Behälterzelle aufweist, kann ein besonders sanftes und stoßfreies Einführen des Behälters in die Behälterzelle bereitgestellt werden. Die Verschwenkbewegung kann so bereitgestellt werden, dass der Zuführbereich der Bewegung der Behälterzelle folgt. Hierdurch können unter anderem die Lärmentwicklung und der Verschleiß insbesondere der Behälterzellen, der Stützkontur sowie des Mitnehmerfingers und insbesondere Bruchschäden an dem Behälter, minimiert werden. Ferner kann der Transport des Behälters mit einer höheren Geschwindigkeit bereitgestellt werden.

Der Zuführbereich ist bevorzugt in beide Richtungen um eine Schwenkachse herum schwenkbar, wodurch ein freies Ende des Zuführbereichs nach oben und unten bewegbar ist, und somit der an der Stützkontur vorbeibewegten Behälterzelle, beziehungsweise einer anderweitig ausgestalteten Übernahmeeinrichtung zum Übernehmen des Behälters von der Vorrichtung zum Transportieren des Behälters, folgen kann. So kann erreicht werden, dass sich das freie Ende des Zuführbereichs stets auf Höhe der Innenwand der Behälterzelle befindet, wodurch der Behälter in die Behälterzelle geschoben werden kann, ohne einen Höhenversatz überwinden zu müssen.

Ein einer bevorzugten Weiterbildung ist ein separater Antrieb oder eine Schwenkvorrichtung zum Schwenken des Zuführbereichs vorgesehen. Dadurch kann die Bewegung des Zuführbereichs genau gesteuert und auf die Bewegung der Behälterzelle beziehungsweise der Übernahmeeinrichtung abgestimmt werden.

In einer bevorzugten Ausführungsvariante ist eine Steuereinrichtung zum Ansteuern der Transporteinrichtung, des mindestens einen Mitnehmerfingers und/oder der Abholvorrichtung vorgesehen, wodurch die Bewegungen der Transporteinrichtung und des Mitnehmerfingers sowie der Abholvorrichtung aufeinander abgestimmt werden können, so dass mittels der daraus entstehenden Ablaufkurve des Behälters ein optimiertes Transportieren des Behälters bereitgestellt werden kann.

Um ein besonders effizientes Übergeben des Behälters von der Vorrichtung an eine Übernahmeeinrichtung bereitzustellen, ist in einer weiter bevorzugten Ausführungsform eine

Behälterzelle zum Aufnehmen des transportierten Behälters vorgesehen, wobei die Behälterzelle bevorzugt translatorisch an der Transportvorrichtung vorbeibewegbar ist.

Alternativ können an der Vorrichtung auch mehrere Mitnehmerfinger angeordnet sein, wobei diese bevorzugt entweder jeweils einen eigenen zweiten Antrieb aufweisen, oder über Koppelmechanismen oder Getriebeanordnungen über einen oder mehrere gemeinsame Antrieb antreibbar sind.

In einer bevorzugten Weiterbildung sind an der Transporteinrichtung mehrere Exzenterachsen vorgesehen, wobei bevorzugt an jeder der Exzenterachsen ein Mitnehmerfinger angeordnet ist. Hierdurch kann die Effizienz der Vorrichtung nochmals verbessert werden.

Bevorzugt können auch mehrere Transporteinrichtungen vorgesehen sein, wobei die Transporteinrichtungen bevorzugt mindestens einen drehbaren Mitnehmerfinger aufweisen. Bevorzugt sind die Transporteinrichtungen dabei an einer gemeinsamen Drehachse angeordnet, so dass sie mittels eines gemeinsamen Antriebs antreibbar sind.

Die zu lösende Aufgabe wird auch mit einem Verfahren mit den Merkmalen des unabhängigen Anspruchs 10 gelöst. Vorteilhafte Weiterbildungen ergeben sich aus den Unteransprüchen.

Entsprechend wird ein Verfahren zum Transportieren eines Behälters in eine Behälterzelle einer Reinigungsmaschine herein, bevorzugt in einer Getränkeabfüllanlage, vorgeschlagen, bei welchem der Behälter mittels eines an einer um eine Drehachse drehbaren Transporteinrichtung angeordneten Mitnehmerfingers bewegt wird. Erfindungsgemäß wird eine Abholvorrichtung zum Übernehmen des Behälters von einer Zulaufeinrichtung zwischen einer Abholposition und einer Übergabeposition bewegt. Die Abholvorrichtung wird zwischen der Abholposition und der Übergabeposition derart geschwenkt, dass der Behälter durch die Schwenkbewegung der Abholvorrichtung in die Übergabeposition gegenüber der Zulaufeinrichtung leicht angehoben wird.

Dadurch, dass eine Abholvorrichtung zum Übernehmen des Behälters von einer Zulaufeinrichtung zwischen einer Abholposition und einer Übergabeposition bewegt, wird, kann ein besonders sanftes Überführen des Behälters zum Transportieren des Behälters bereitgestellt werden.

Bevorzugt wird eine Behälteraufnahme der Abholvorrichtung dabei in der Abholposition an der Zulaufeinrichtung positioniert, so dass ein durch die Zulaufeinrichtung bereitgestellter zu transportierender Behälter sanft und ohne stoßhafte oder ruckartige Bewegungen in der Behälteraufnahme aufgenommen werden kann. In der Übergabeposition wird die Behälteraufnahme der Abholvorrichtung bevorzugt an der Stützkontur positioniert, so dass bei einem Mitnehmen des Behälters durch den Mitnehmerfinger der Behälter sanft und ohne stoßhafte oder ruckartige Bewegungen bewegt werden kann.

Um ein besonders einfaches und robustes Bewegen der Abholvorrichtung zwischen der Abholposition und der Übergabeposition mit hoher Genauigkeit zu ermöglichen kann die Abholvorrichtung in einer bevorzugten Weiterbildung an einer Führungskurve geführt wird, wobei bevorzugt ein Führungstaster der Abholvorrichtung entlang der Führungskurve geführt wird, und wobei der Führungstaster die Bewegung der Abholvorrichtung zwischen der Abholposition und der Übergabeposition vorgibt.

In einer weiter bevorzugten Ausbildung wird der Mitnehmerfinger zum Einführen des Behälters in die Behälterzelle oder zum Ausstoßen des Behälters aus der Behälterzelle um eine zur Drehachse exzentrisch angeordnete Exzenterachse gedreht.

Dadurch, dass der Mitnehmerfinger zum Einführen des Behälters in die Behälterzelle oder zum Ausstoßen des Behälters aus der Behälterzelle um eine zur Drehachse exzentrisch angeordnete Exzenterachse gedreht wird, kann eine weitgehend frei einrichtbare und steuerbare Trajektorie des Mitnehmerfingers und damit auch der Ablaufkurve der Behältertransportbewegung bereitgestellt werden. Hierdurch können für verschiedene Behältertypen jeweils angepasste dynamische Ablaufkurven bereitgestellt werden, wodurch stoßhafte Bewegungen der Behälter vermieden werden können und somit eine geringere Lärmentwicklung beim Transportieren und eine geringere Abnutzung der Komponenten einer das Verfahren ausführenden Vorrichtung, insbesondere ein verringerter Oberflächenverschleiß und/oder Abrieb , sowie insbesondere ein geringes Aufkommen an Bruchschäden an den zu reinigenden Behältern erreicht werden.

In einer weiter bevorzugten Ausbildung werden die Transporteinrichtung und der mindestens eine Mitnehmerfinger unabhängig voneinander angesteuert. Dadurch kann die Ablaufkurve für jeden Behältertyp genau eingestellt werden, wobei insbesondere zur Übernahme des Behälters von einer Zulaufeinrichtung ein besonders sanftes Übernehmen des Behälters durch den Mitnehmerfinger und/oder ein besonders sanftes Übergeben des Behälters in eine Übernahmeeinrichtung bereitgestellt werden kann.

In einer besonders bevorzugten Ausgestaltung wird ein schwenkbar angeordneter Zuführbereich einer Stützkontur zum Stützen des transportierten Behälters mit einer an dieser vorbeibewegten Behälterzelle synchronisiert mitgeschwenkt. So kann ein besonders sanftes und stoßfreies Einführen des Behälters in die Behälterzelle bereitgestellt werden. Die Verschwenkbewegung kann so bereitgestellt werden, dass der Zuführbereich der Bewegung der Behälterzelle folgt. Hierdurch können unter anderem die Lärmentwicklung und der Verschleiß insbesondere der Behälterzellen, der Stützkontur sowie des Mitnehmerfingers und insbesondere Bruchschäden an dem Behälter minimiert werden. Ferner kann der Transport des Behälters mit einer höheren Geschwindigkeit bereitgestellt werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Seitenansicht einer Vorrichtung zum Transportieren eines Behälters mit einer Abholvorrichtung in einer Abholposition;
- Figur 2: schematisch die Vorrichtung aus Figur 1 in einer gegenüberliegenden Seitenansicht;
- Figur3: schematisch die Vorrichtung aus Figur 1 mit einer Abholvorrichtung in einer Übergabeposition;
- Figur 4: schematisch einer Seitenansicht einer Vorrichtung zum Transportieren eines Behälters in einer weiteren Ausführungsform mit der Abholvorrichtung in der Übergabeposition;
- Figur 5: schematisch die Vorrichtung aus Figur 4 in einem Zustand des Behältertransports;
- Figur 6: schematisch die Vorrichtung aus Figur 4 zu Beginn eines Einführvorgangs des Behälters in eine Behälterzelle; und
- Figur 7: schematisch die Vorrichtung aus Figur 4 nach abgeschlossenem Einführvorgang des Behälters in die Behälterzelle.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

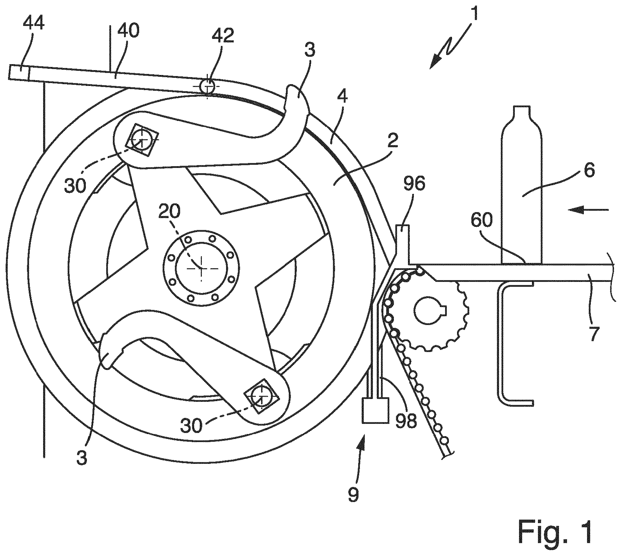

In Figur 1 ist schematisch eine Seitenansicht einer Vorrichtung 1 zum Transportieren eines Behälters 6 mit einer Abholvorrichtung 9 in einer Abholposition gezeigt. Die Abholvorrichtung 9 ist an einer Abholschwenkachse, welche hier durch die Transporteinrichtung 2 verdeckt ist, drehbar gelagert. An einem Abholschwenkarm 98 ist eine Behälteraufnahme 96 der Abholvorrichtung 9 angeordnet. Die Behälteraufnahme 96 ist auf die Zulaufeinrichtung 7 gerichtet, so dass ein durch eine Zulaufeinrichtung 7 in Form eines Förderbandes an die Abholvorrichtung 9 zugeführter Behälter 6 an die Behälteraufnahme 96 sanft übergeben wird, ohne dass der Behälter 6 stoßartige oder ruckartige Bewegungen erfährt.

Eine Transporteinrichtung 2 ist drehbar um eine Drehachse 20 angeordnet, welche mittels eines hier nicht gezeigten ersten Antriebs antreibbar ist. Exzentrisch zu der Drehachse 20 sind zwei jeweils um eine Exzenterachse 30 drehbar gelagerte Mitnehmerfinger 3 an der Transporteinrichtung 2 angeordnet. Der Mitnehmerfinger 3 beziehungsweise die Exzenterachse 30 ist mittels eines hier nicht gezeigten zweiten Antriebs antreibbar.

Ferner ist eine Stützkontur 4 vorgesehen, welche den Behälter 6 während seines Transports stützt und entlang welcher der zu transportierende Behälter 6 bewegt wird, wobei der Behälter 6 dann an seinem Bodenbereich 60 von dem Mitnehmerfinger 3 geschoben beziehungsweise transportiert wird.

Über die Zulaufeinrichtung 7 wird der zu transportierende Behälter 6 der Abholvorrichtung 9 der Vorrichtung 1 zunächst zugeführt. Die Zulaufeinrichtung 7 kann beispielsweise ein Zulauftisch, ein Stautisch oder ein Förderband sein.

Am Ende der Stützkontur 4 ist ein Zuführbereich 40 angeordnet, welcher um eine Schwenkachse 42 schwenkbar ist und an dessen freiem Ende 44 eine hier nicht gezeigte Übernahmeeinrichtung, in welche der Behälter zu transportieren ist, angeordnet ist.

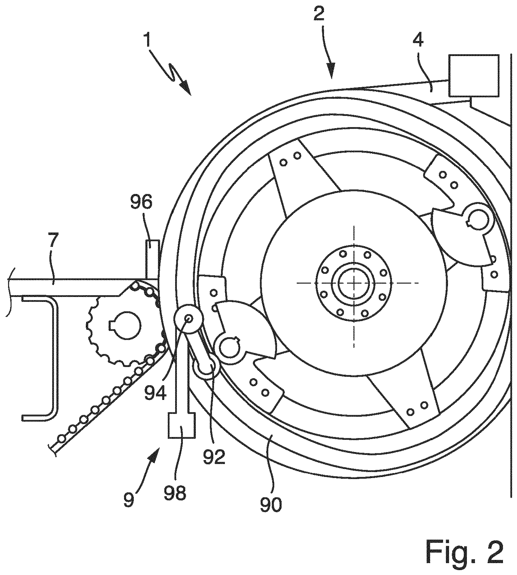

Figur 2 zeigt schematisch die Vorrichtung 1 aus Figur 1 in einer gegenüberliegenden Seitenansicht. Die an der Abholschwenkachse 94 drehbar gelagerte Abholvorrichtung 9 weist einen Führungstaster 92 auf, welcher in einer an der Transporteinrichtung 2 angeordneten Führungskurve 90 in Form einer Nockenkurve, folglich einer Ablaufkurve mit bezüglich der Drehachse 20 der Transporteinrichtung 2 über dessen Umfang gesehen unterschiedlichem Radius, geführt ist. Bei sich drehender Transporteinrichtung 2 erfährt die Abholvorrichtung 9 durch eine Lageänderung des in die Nockenkurve greifenden Führungstasters 92 entsprechend der Veränderung des Radius der Nockenkurve an der Stelle des Führungstasters 92 eine Schwenkbewegung um die Abholschwenkachse 94. Aufgrund dieser Schwenkbewegung wird die an dem Schwenkarm 98 angeordnete Behälteraufnahme 96 entsprechend zwischen der Abholposition, in welcher der zu übernehmende Behälter von der Zulaufeinheit 7 an die Behälteraufnahme 96 übergeben wird, und der Übergabeposition, in welcher der zu transportierende Behälter an der Stützkontur 4 anliegt, bewegt.

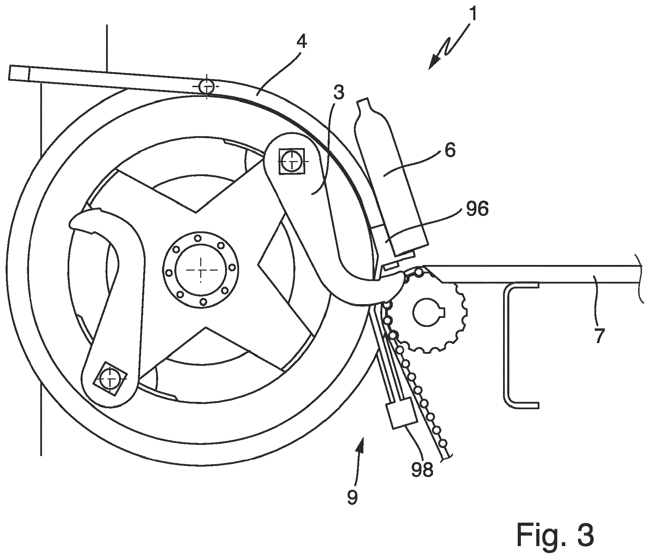

Die Vorrichtung 1 aus Figur 1 ist in Figur 3 schematisch mit der Abholvorrichtung 9 in einer Übergabeposition gezeigt, kurz bevor der Mitnehmerfinger 3 zum Mitnehmen des durch die Abholvorrichtung 9 positionierten Behälters 6 mit dem Behälter 6 wie oben beschrieben in Eingriff gelangt. Durch die Schwenkbewegung der Abholvorrichtung 9 von der Abholposition in die Übergabeposition wird erreicht, dass der Behälter 6 an der Stützkontur 4 anliegt und bei einem Mitnehmen des Behälters 6 durch den Mitnehmer 3 jener lediglich eine Gleitbewegung entlang der Stützkontur 4 erfährt.

Im vorliegenden Fall ist der Behälter 6 durch die Schwenkbewegung der Abholvorrichtung 9 in die Übergabeposition gegenüber der Zulaufeinrichtung 7 leicht angehoben.

Nach dem Mitnehmen des Behälters 6 durch den Mitnehmerfinger 3 wird die Abholvorrichtung 9 aufgrund des sich ändernden Radius der Führungskurve 90 an der Stelle des Führungstasters 92 wieder in die Abholposition geschwenkt und steht zum Aufnehmen eines weiteren zu transportierenden Behälters, welcher durch die Zulaufeinrichtung 7 zugeführt wird, bereit.

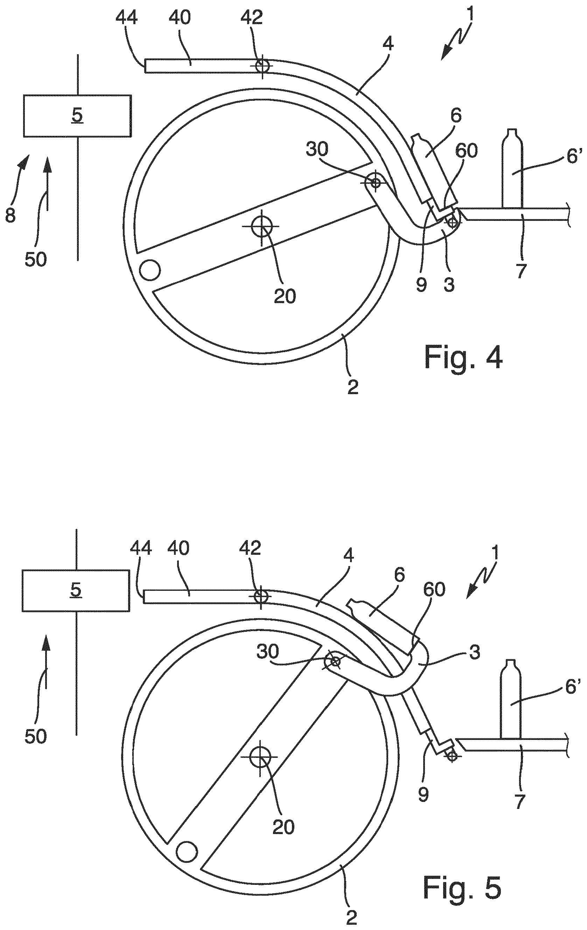

Figur 4 zeigt schematisch einer Seitenansicht einer Vorrichtung 1 zum Transportieren eines Behälters 6 in einer weiteren Ausführungsform mit einer Abholvorrichtung 9 in der Übergabeposition. Die Zulaufeinrichtung 7 ist hier als Stautisch ausgebildet. Entsprechend der Vorrichtung 1 aus den Figuren 1 bis 3 ist hier ebenfalls eine Transporteinrichtung 2 drehbar um eine Drehachse 20 angeordnet, welche mittels eines hier nicht gezeigten ersten Antriebs antreibbar ist. Exzentrisch zu der Drehachse 20 ist wiederum ein um eine Exzenterachse 30 drehbar gelagerter Mitnehmerfinger 3 an der Transporteinrichtung 2 angeordnet. Der Mitnehmerfinger 3 beziehungsweise die Exzenterachse 30 ist mittels eines hier nicht gezeigten zweiten Antriebs antreibbar.

Ferner ist ebenfalls eine Stützkontur 4 vorgesehen, welche den Behälter 6 während seines Transports stützt und entlang welcher der zu transportierende Behälter 6 bewegt wird, wobei der Behälter 6 an seinem Bodenbereich 60 von dem Mitnehmerfinger 3 geschoben beziehungsweise transportiert wird.

Über die Zulaufeinrichtung 7 wird der zu transportierende Behälter 6 der Vorrichtung 1 zunächst zugeführt. Die Zulaufeinrichtung 7 kann beispielsweise ein Zulauftisch, ein Stautisch oder ein Förderband sein. Der jeweilige Behälter 6 wird über die Zulaufeinrichtung 7 entsprechend der Beschreibung der Figuren 1 bis 3 zugeführt, wobei der Behälter 6 durch die in Figur 4 gezeigten Ausführungsform der Abholvorrichtung 9 kein Anheben erfährt, sondern lediglich ein sanftes Anlehnen des Behälters an die Stützkontur 4 erfolgt, so dass eine Übergabe des jeweiligen Behälters 6 derart stattfinden kann, dass der Mitnehmerfinger 3 den Behälter 6 aufnimmt und diesen entlang der Stützkontur 4 transportieren kann. Diese Ausführungsform entspricht nicht der beanspruchten Erfindung.

Am Ende der Stützkontur 4 ist ebenfalls ein Zuführbereich 40 angeordnet, welcher um eine Schwenkachse 42 schwenkbar ist und an dessen freiem Ende 44 eine Übernahmeeinrichtung 8 in Form einer Transportkette angeordnet ist. Die Übernahmeeinrichtung 8 weist dabei eine Behälterzelle 5 auf, in welche der Behälter 6 dann schließlich einzuschieben ist, um ihn dann durch die Reinigungsmaschine hindurch transportieren zu können. Die Behälterzelle 5 wird hierbei in einer im Wesentlichen translatorischen Bewegung, die durch den Pfeil als Bewegungsrichtung 50 angedeutet ist, an dem freien Ende 44 des Zuführbereichs 40 vorbeigeführt. Alternativ kann die Übernahmeeinrichtung 8 auch entgegen der durch den Pfeil angedeuteten Richtung bewegt werden.

Der Behälter 6 wird von der Zulaufeinrichtung 7 an die sich in der Abholposition befindende Abholvorrichtung 9 der Vorrichtung 1 in einer im Wesentlichen vertikalen, aufrecht stehenden Position übergeben. Im Anschluss daran wird die Abholvorrichtung in die Übergabeposition verschwenkt, um den zu transportierenden Behälter 6 sanft an die Stützkontur anzulegen. Im in Figur 4 gezeigten Moment der Übernahme des Behälters 6 von der sich in der Übergabeposition befindenden Abholvorrichtung 9 durch den Mitnehmerfinger 3, welcher bezüglich der Rotationsrichtung der Transporteinrichtung 2 nach hinten positioniert ist, wird die Rotationsgeschwindigkeit der Transporteinrichtung 2 so reduziert, dass ein sanftes Übernehmen des Behälters 6 erreicht wird. Ferner wird der Mitnehmerfinger 3 gleichzeitig um ein geringes Maß entgegen der Rotationsrichtung der Transporteinrichtung 2 rotiert, so dass das Auftreffen des Mitnehmerfingers 3 auf den Bodenbereich 60 des Behälters 6 besonders sanft ausfällt. Ferner kann die Transporteinrichtung 2 durch die gegenläufige Bewegung des Mitnehmerfingers 3 eine gewisse Rotationsgeschwindigkeit beibehalten und muss nicht vollständig abgebremst werden.

Die Bewegung des Mitnehmerfingers 3 relativ zur Transporteinrichtung 2 kann am besten nachvollzogen werden, wenn eine gedachte radiale Ebene durch die Drehachse 20 der Transporteinrichtung 2 und der Exzenterachse 30 gelegt wird und die Bewegung des Mitnehmerfingers 3 hierzu betrachtet wird. Bei der Übernahme des Behälters 6 bewegt sich der Mitnehmerfinger 3 entweder gegenüber der radialen Ebene nicht oder wird im Moment der Übernahme des Behälters 6 sogar leicht von der radialen Ebene fort bewegt.

Figur 5 zeigt schematisch die Vorrichtung 1 aus Figur 4 in einem Zustand in dem der Behälter 6 durch die Rotationsbewegung der Transporteinrichtung 2 entlang der Stützkontur 4 in Richtung der Behälterzelle 5 verschoben wird. Der Mitnehmerfinger 3 bewegt sich in dieser Phase des Transportvorgangs zusammen mit der Transporteinrichtung 2, aber nicht relativ zur Transporteinrichtung 2, so dass eine Positionsänderung des Mitnehmerfingers 3 gegenüber der oben definierten radialen Ebene nicht stattfindet.

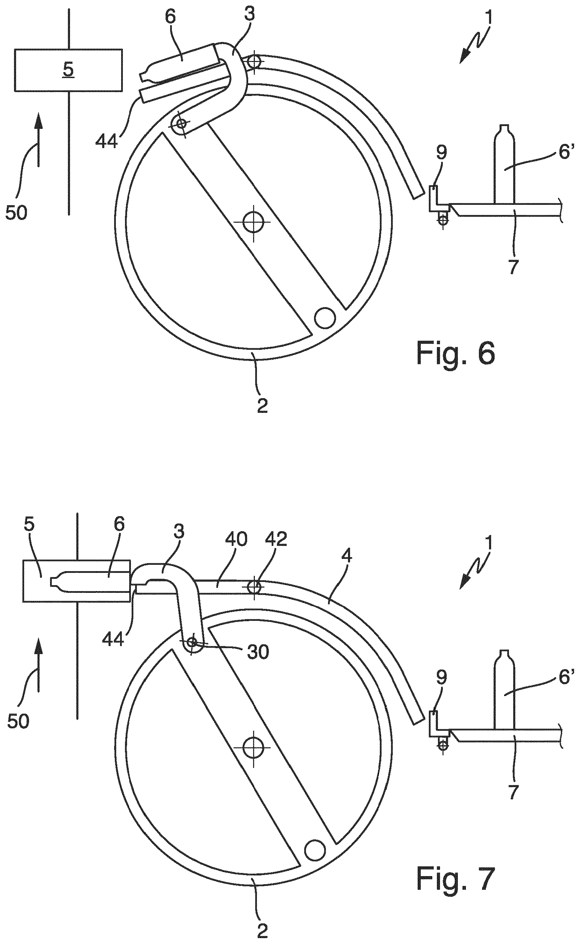

Aus Figur 6 ist schematisch die Vorrichtung aus Figur 4 zu Beginn eines Einführvorgangs des Behälters 6 in eine Behälterzelle 5 zu entnehmen. In dieser Position ist die Rotationsgeschwindigkeit der Transporteinrichtung 2 wieder reduziert. Der Mitnehmerfinger 3 befindet sich weiterhin in der in Figur 2 beschriebenen, nach hinten gerichteten Position, wobei der Behälter 6 entlang der Stützkontur 4 in eine im Wesentlichen horizontale Position transportiert wurde. Der Zuführbereich 40 ist in dieser Situation um ein geringes Maß der sich in Bewegungsrichtung 50 bewegenden Behälterzelle 5 entgegen geschwenkt, so dass dessen freies Ende 44 auf einer Höhe positioniert ist, welche ein gradliniges Einführen des Behälters 6 in die Behälterzelle 5 ermöglicht.

Durch die Verzögerung der Rotationsbewegung der Transporteinrichtung 2 ist diese in Figur 7, welche schematisch die Vorrichtung 1 aus Figur 4 nach abgeschlossenem Einführvorgang des Behälters 6 in die Behälterzelle 5 zeigt, im Vergleich zu ihrer Position in Figur 6 nur unwesentlich weiterrotiert. Der Mitnehmerfinger 3 allerdings hat eine Rotationsbewegung in Richtung der Rotationsrichtung der Transporteinrichtung 2 erfahren, also zunächst in Richtung auf die gedachte Ebene zu oder gar über diese hinaus, wobei er aus seiner nach hinten gerichteten Position um die Exzenterachse 30 herum nach vorne gedreht ist.

Um die Trajektorie des Behälters 6 zu optimieren, kann die Transporteinrichtung 2 auch temporär entgegen deren Hauptrotationsrichtung rotieren.

Durch diese Drehbewegung des Mitnehmerfingers 3 um die Exzenterachse 30 herum wird der Behälter 6 in einer quasi linearen Bewegung in die Behälterzelle 5 eingeschoben. Um der Bewegung der Behälterzelle 5 zu folgen, wird der Zuführbereich 40 um dessen Schwenkachse 42 im Sinne der Bewegungsrichtung 50 der Behälterzelle verschwenkt, so dass die Innenwand der Behälterzelle 5 und das freie Ende 44 weiterhin auf einer Höhe liegen. Durch dieses Mitschwenken des Zuführbereichs 40 mit der Behälterzelle 5 ist sichergestellt, dass der Behälter 6 während des Einschiebens in die Behälterzelle 5 keinen abrupten Höhenversatz zwischen der sich bewegenden Behälterzelle 5 und dem Zuführbereich 40 überwinden muss. Das Mitschwenken des Zuführbereichs 40 im Sinne der Bewegungsrichtung 50 ist dabei in beide Bewegungsrichtungen der Übernahmeeinrichtung 8, folglich mit und entgegen der Richtung des Pfeils, möglich.

Die Abholvorrichtung 9 ist in der Zwischenzeit wieder in die Abholposition bewegt worden, so dass ein nächster zu transportierender Behälter 6' von der Zulaufeinrichtung 7 übernommen werden und daraufhin an die Stützkontur 4 angelegt werden kann.

Im Anschluss an das Einschieben des Behälters 6 in die Behälterzelle wird der Mitnehmerfinger 3 wieder in die nach hinten gerichtete Position gemäß den Figuren 4 bis 6 zurückrotiert und die Transporteinrichtung 2 beschleunigt, um den nächsten zu transportierenden Behälter 6' mittels des Mitnehmerfingers 3 von der Abholvorrichtung 9 zu übernehmen, in Richtung der Übernahmeeinrichtung 8 zu transportieren und in eine weitere Behälterzelle einzuführen.

### Bezugszeichenliste

- 1: Vorrichtung
- 2: Transporteinrichtung
- 20: Drehachse
- 3: Mitnehmerfinger
- 30: Exzenterachse
- 4: Stützkontur
- 40: Zuführbereich
- 42: Schwenkachse
- 44: freies Ende
- 5: Behälterzelle
- 50: Bewegungsrichtung
- 6, 6': Behälter
- 60: Bodenbereich
- 7: Zulaufeinrichtung
- 8: Übernahmeeinrichtung
- 9: Abholvorrichtung
- 90: Führungskurve
- 92: Führungstaster
- 94: Abholschwenkachse
- 96: Behälteraufnahme
- 98: Abholschwenkarm

## Patentansprüche

1. Vorrichtung (1) zum Transportieren eines Behälters (6, 6') in eine Behälterzelle (5) einer Reinigungsmaschine hinein, bevorzugt in einer Getränkeabfüllanlage, umfassend eine um eine Drehachse (20) drehbare Transporteinrichtung (2), und mindestens einen an der Transporteinrichtung (2) angeordneten Mitnehmerfinger (3) zum Transportieren des Behälters (6, 6'), wobei
eine Abholvorrichtung (9) zum Übernehmen des Behälters (6, 6') von einer Zulaufeinrichtung (7) vorgesehen ist, wobei die Abholvorrichtung (9) zwischen einer Abholposition und einer Übergabeposition bewegbar ist
**dadurch gekennzeichnet, dass**
die Abholvorrichtung (9) zwischen der Abholposition und der Übergabeposition derart schwenkbar ist, dass der Behälter (6) durch die Schwenkbewegung der Abholvorrichtung (9) in die Übergabeposition gegenüber der Zulaufeinrichtung (7) leicht angehoben wird.

2. Vorrichtung (1) gemäß Anspruch 1, **dadurch gekennzeichnet, dass** eine Behälteraufnahme (96) der Abholvorrichtung (9) in der Abholposition an der Zulaufeinrichtung (7) positioniert ist und/oder die Behälteraufnahme (96) in der Übergabeposition an einer Stützkontur (4) zum Stützen eines Behälters (6, 6') während des Transportierens positioniert ist.

3. Vorrichtung gemäß Anspruch 1 oder 2, **dadurch gekennzeichnet, dass** eine Führungskurve (90) zum Bewegen der Abholvorrichtung (9) vorgesehen ist, wobei bevorzugt ein Führungstaster (92) entlang der Führungskurve (90) geführt ist.

4. Vorrichtung gemäß einem der vorstehenden Ansprüche, **dadurch gekennzeichnet, dass** der Mitnehmerfinger (3) um eine zur Drehachse (20) exzentrisch angeordnete Exzenterachse (30) drehbar gelagert ist.

5. Vorrichtung gemäß Anspruch 4, **dadurch gekennzeichnet, dass** die Transporteinrichtung (2) und der mindestens eine Mitnehmerfinger (3) unabhängig voneinander steuerbar sind.

6. Vorrichtung (1) gemäß Anspruch 4 oder 5, **dadurch gekennzeichnet, dass** ein erster Antrieb zum Antreiben der Transporteinrichtung (2) und mindestens ein zweiter Antrieb zum Antreiben des mindestens eines Mitnehmerfingers (3) vorgesehen ist.

7. Vorrichtung (1) gemäß einem der vorstehenden Ansprüche, **dadurch gekennzeichnet, dass** alle Mitnehmerfinger (3) auf einer gemeinsamen Welle angeordnet sind und mittels der gemeinsamen Welle antreibbar sind.

8. Vorrichtung (1) gemäß einem der vorstehenden Ansprüche, **dadurch gekennzeichnet, dass** die Stützkontur (4) einen schwenkbar angeordneten Zuführbereich (40) zum Zuführen des Behälters (6, 6') in eine Behälterzelle (5) aufweist, wobei bevorzugt ein separater Antrieb oder eine Schwenkvorrichtung zum Schwenken des Zuführbereichs (40) vorgesehen ist.

9. Vorrichtung (1) gemäß einem der vorstehenden Ansprüche, **dadurch gekennzeichnet, dass** eine Steuereinrichtung zum separaten Ansteuern der Transporteinrichtung (2), mindestens eines Mitnehmerfingers (3) und/oder der Abholvorrichtung (9) vorgesehen ist.

10. Verfahren zum Transportieren eines Behälters (6, 6') in eine Behälterzelle (5) einer Reinigungsmaschine hinein, bevorzugt in einer Getränkeabfüllanlage, wobei der Behälter (6, 6') mittels eines an einer sich um eine Drehachse (20) drehenden Transporteinrichtung (2) angeordneten Mitnehmerfingers (3) bewegt wird, wobei
eine Abholvorrichtung (9) zum Übernehmen des Behälters (6, 6') von einer Zulaufeinrichtung (7) zwischen einer Abholposition und einer Übergabeposition bewegt wird,
**dadurch gekennzeichnet, dass**
die Abholvorrichtung (9) zwischen der Abholposition und der Übergabeposition derart geschwenkt wird, dass der Behälter (6) durch die Schwenkbewegung der Abholvorrichtung (9) in die Übergabeposition gegenüber der Zulaufeinrichtung (7) leicht angehoben wird.

11. Verfahren gemäß Anspruch 10, **dadurch gekennzeichnet, dass** eine Behälteraufnahme (96) der Abholvorrichtung (9) in der Abholposition an der Zulaufeinrichtung (7) zum Übernehmen des zu transportierenden Behälters (6, 6') positioniert wird und/oder die Behälteraufnahme (96) in der Übergabeposition zum Anlegen des zu transportierenden Behälters (6, 6') an eine Stützkontur (4) zum Stützen eines Behälters (6, 6') während des Transportierens positioniert wird.

12. Verfahren gemäß Anspruch 10 oder 11, **dadurch gekennzeichnet, dass** die Abholvorrichtung (9) an einer Führungskurve (90) geführt wird, wobei bevorzugt ein Führungstaster (92) der Abholvorrichtung (9) entlang der Führungskurve (90) geführt wird, wobei der Führungstaster (92) die Bewegung der Abholvorrichtung (9) zwischen der Abholposition und der Übergabeposition vorgibt.

13. Verfahren gemäß einem der Ansprüche 10 bis 12, **dadurch gekennzeichnet, dass** der Mitnehmerfinger (3) zum Transportieren des Behälters (6, 6') in die Behälterzelle hinein um eine zur Drehachse (20) exzentrisch angeordnete Exzenterachse (30) gedreht wird, und/oder
dass die Transporteinrichtung (2) und der Mitnehmerfinger (3) unabhängig voneinander angesteuert werden.

14. Verfahren gemäß einem der Ansprüche 10 bis 13,
**dadurch gekennzeichnet, dass** ein
schwenkbar angeordneter Zuführbereich (40) einer Stützkontur (4) zum Stützen des transportierten Behälters (6, 6') mit einer an dieser vorbeibewegten Behälterzelle (5) synchronisiert mitgeschwenkt wird.

## Claims

1. Device (1) for transporting a container (6, 6') into a container cell (5) of a cleaning machine, preferably in a beverage filling line, comprising a transport device (2) rotatable about an axis of rotation (20), and at least one carrier finger (3) arranged on the transport device (2) for transporting the container (6, 6'), wherein
a pick-up device (9) is provided for taking over the container (6, 6') from a feeding device (7), wherein the pick-up device (9) can be moved between a pick-up position and a transfer position,
**characterised in that**
the pick-up device (9) can be pivoted between the pick-up position and the transfer position such that the container (6) is lifted slightly by the pivot movement of the pick-up device (8) into the transfer position relative to the feeding device (7).

2. Device (1) according to claim 1, **characterised in that** a container mount (96) of the pick-up device (9) is positioned in the pick-up position on the feeding device (7) and/or the container mount (96) is positioned during transport in the transfer position on a support contour (4) for supporting a container (6, 6').

3. Device according to claim 1 or 2, **characterised in that** a guiding curve (90) is provided for moving the pick-up device (9), wherein preferably a guiding sensor (92) is guided along the guiding curve (90).

4. Device according to any of the preceding claims, **characterised in that** the carrier finger (3) is mounted rotatably about an eccentric axis (30) eccentric to the axis of rotation (20).

5. Device according to claim 4, **characterised in that** the transport device (2) and the at least one carrier finger (3) can be controlled independently of one another.

6. Device (1) according to claim 4 or 5, **characterised in that** a first drive for driving the transport device (2) and a least one second drive for driving the at least one carrier finger (3) is provided.

7. Device (1) according to any of the preceding claims, **characterised in that** all carrier fingers (3) are arranged on a common shaft and can be driven by means of the common shaft.

8. Device (1) according to any of the preceding claims, **characterised in that** the support contour (4) has a pivotably arranged feed region (40) for feeding the container (6, 6') into a container cell (5), wherein preferably a separate driven or a pivot device is provided for pivoting the feed region (40).

9. Device (1) according to any of the preceding claims, **characterised in that** a control device is provided for separate control of the transport device (2), at least a carrier finger (3) and/or the pick-up device (9).

10. Method for transporting a container (6, 6') into a container cell (5) of a cleaning machine, preferably in a beverage filling line, wherein the container (6, 6') is moved by means of a carrier finger (3) arranged on a transport device (2) rotating about an axis of rotation (20), wherein
a pick-up device (9) for taking over the container (6, 6') from a feeding device (7) is moved between a pick-up position and a transfer position,
**characterised in that**
the pick-up device (9) is pivoted between the pick-up position and the transfer position such that the container (6) is lifted slightly by the pivot movement of the pick-up device (9) into the transfer position relative to the feeding device (7).

11. Method according to claim 10, **characterised in that** a container mount (96) of the pick-up device (9) is positioned in the pick-up position on the feeding device (7) for taking over the container (6, 6') to be transported and/or the container mount (96) is positioned in the transfer position for placing the container (6, 6') to be transported on a support contour (4) for supporting a container (6, 6') during the transport.

12. Method according to claim 10 or 11, **characterised in that** the pick-up device (9) is guided on a guiding curve (90), wherein preferably a guiding sensor (92) of the pick-up device (9) is guided along the guiding curve (90), wherein the guiding sensor (92) determines the movement of the pick-up device (9) between the pick-up position and the transfer position.

13. Method according to any of claims 10 to 12, **characterised in that** the carrier finger (3) for transporting the container (6, 6') into the container cell is rotated about an eccentric axis (30) eccentric to the axis of rotation (20) and/or
**in that** the transport device (2) and the carrier finger (3) are controlled independently of one another.

14. Method according to any of claims 10 to 13, **characterised in that** a pivotably arranged feed region (40) of a support contour (4) for supporting the transported container (6, 6') is pivoted along in synchronisation with a container cell (5) moving past it.

## Revendications

1. Dispositif (1) pour transporter un récipient (6, 6') dans une cellule à récipient (5) d'une machine de nettoyage, de préférence dans une installation de remplissage de boissons, comprenant un dispositif de transport (2) rotatif autour d'un axe de rotation (20), et au moins un doigt d'entraînement (3) disposé sur le dispositif de transport (2) pour transporter le récipient (6, 6'), dans lequel
un dispositif de récupération (9) est prévu pour prendre en charge le récipient (6, 6') depuis un dispositif d'alimentation (7), dans lequel le dispositif de récupération (9) est déplaçable entre une position de récupération et une position de transfert
**caractérisé en ce que**
le dispositif de récupération (9) peut être pivoté entre la position de récupération et la position de transfert de sorte que le récipient (6) soit légèrement soulevé par rapport au dispositif d'alimentation (7) par le mouvement de pivotement du dispositif de récupération (9) dans la position de transfert.

2. Dispositif (1) selon la revendication 1, **caractérisé en ce qu'**un logement de récipient (96) du dispositif de récupération (9) est positionné en position de récupération sur le dispositif d'alimentation (7) et/ou le logement de récipient (96) est positionné en position de transfert sur un contour de support (4) pour supporter un récipient (6, 6') pendant le transport.

3. Appareil selon la revendication 1 ou 2, **caractérisé en ce qu'**une courbe de guidage (90) est prévue pour déplacer le dispositif de récupération (9), dans lequel une sonde de guidage (92) est de préférence guidée le long de la courbe de guidage (90).

4. Dispositif selon l'une quelconque des revendications précédentes, **caractérisé en ce que** le doigt d'entraînement (3) est monté de manière rotative autour d'un axe excentré (30) disposé de manière excentrée par rapport à l'axe de rotation (20).

5. Dispositif selon la revendication 4, **caractérisé en ce que** le dispositif de transport (2) et l'au moins un doigt d'entraînement (3) peuvent être commandés indépendamment l'un de l'autre.

6. Dispositif (1) selon la revendication 4 ou 5, **caractérisé en ce qu'**un premier entraînement est prévu pour entraîner le dispositif de transport (2) et au moins un second entraînement est prévu pour entraîner au moins un doigt d'entraînement (3).

7. Dispositif (1) selon l'une quelconque des revendications précédentes, **caractérisé en ce que** tous les doigts d'entraînement (3) sont disposés sur un arbre commun et peuvent être entraînés au moyen de l'arbre commun.

8. Dispositif (1) selon l'une quelconque des revendications précédentes, **caractérisé en ce que** le contour d'appui (4) présente une zone d'amenée (40) disposée de manière pivotante pour amener le récipient (6, 6') dans une cellule à récipient (5), dans lequel un entraînement séparé ou un dispositif de pivotement est de préférence prévu pour faire pivoter la zone d'amenée (40).

9. Appareil (1) selon l'une quelconque des revendications précédentes, **caractérisé en ce qu'**un dispositif de commande est prévu pour commander séparément le dispositif de transport (2), au moins un doigt d'entraînement (3) et/ou le dispositif de récupération (9).

10. Procédé pour transporter un récipient (6, 6') dans une cellule à récipient (5) d'une machine de nettoyage, de préférence dans une installation de remplissage de boissons, dans lequel le récipient (6, 6') est déplacé au moyen d'un doigt d'entraînement (3) disposé sur un dispositif de transport (2) tournant autour d'un axe de rotation (20), dans lequel
un dispositif de récupération (9) pour prendre en charge le récipient (6, 6') depuis un dispositif d'alimentation (7) est déplacé entre une position de récupération et une position de transfert,
**caractérisé en ce que**
le dispositif de récupération (9) est pivoté entre la position de récupération et la position de transfert de sorte que le récipient (6) soit légèrement soulevé par rapport au dispositif d'alimentation (7) par le mouvement de pivotement du dispositif de récupération (9) dans la position de transfert.

11. Procédé selon la revendication 10, **caractérisé en ce qu'**un logement de récipient (96) du dispositif de récupération (9) est positionné en position de récupération sur le dispositif d'alimentation (7) pour prendre en charge le récipient à transporter (6, 6') et/ou le logement de récipient (96) est positionné en position de transfert pour appliquer le récipient à transporter (6, 6') sur un contour de support (4) pour supporter un récipient (6, 6') pendant le transport.

12. Procédé selon la revendication 10 ou 11, **caractérisé en ce que** le dispositif de récupération (9) est guidé le long d'une courbe de guidage (90), dans lequel de préférence une sonde de guidage (92) du dispositif de récupération (9) est guidée le long de la courbe de guidage (90), dans lequel la sonde de guidage (92) prescrit le mouvement du dispositif de récupération (9) entre la position de récupération et la position de transfert.

13. Procédé selon l'une quelconque des revendications 10 à 12, **caractérisé en ce que,** le doigt d'entraînement (3) est tourné autour d'un axe excentré (30) disposé de manière excentrée par rapport à l'axe de rotation (20) pour transporter le conteneur (6, 6') dans la cellule à récipient, et/ou
**en ce que** le dispositif de transport (2) et le doigt d'entraînement (3) sont commandés indépendamment l'un de l'autre.

14. Procédé selon l'une quelconque des revendications 10 à 13, **caractérisé en ce qu'**une zone d'alimentation (40) disposée de manière pivotante d'un contour d'appui (4) pour supporter le récipient transporté (6, 6') est pivotée de manière synchronisée avec une cellule à récipient (5) déplacée devant celle-ci.
